# EUROPEAN PATENT APPLICATION

(11) **EP 3 978 454 A1**
(43) Date of publication of application: **06.04.2022**
(21) Application number: 20020455.0
(22) Date of filing: 05.10.2020

(54) **METHOD OF PRODUCING A SUPPLEMENTARY CEMENTITIOUS MATERIAL**

(71) Applicant: Holcim Technology Ltd, 6300 Zug (CH)
(72) Inventor: Kruspan, Peter, CH-5113 Holderbank (CH); Bucher, Ernst, CH-5113 Holderbank (CH); Lunk, Peter, CH-5113 Holderbank (CH); Weihrauch, Michael, CH-5113 Holderbank (CH)
(74) Representative: Keschmann, Marc

(57) **Abstract**

A method of producing a supplementary cementitious material, comprises the steps of:
- providing at least one waste material selected from quarry sludge, aggregate washing sludge and road cleaning sludge,
- removing excess water from said waste material so to provide a dry waste material,
- mixing the dry waste material with a source of calcium sulphate to obtain a raw material mixture,
- calcining the raw material mixture at a temperature of 700-900°C to obtain the supplementary cementitious material.

## Description

The invention refers to a method for producing a supplementary cementitious material from waste material.

Various types of mineral components may be added to Portland cement in order to obtain composite cements. In particular, the use of pozzolanic and/or latent hydraulic material ("supplementary cementitious material") as additions to Portland cement mixtures has become common practice.

By substituting pozzolans and/or latent hydraulic materials for Portland cement the specific emission of CO₂ in the production of cement will be reduced. During the production of Portland cement clinker about 0.6 tons of CO₂ per ton of Portland cement clinker are emitted by the calcination of the raw materials and from the oxidation of the fuels in the rotary tubular kiln.

Pozzolans are a broad class of siliceous or siliceous and aluminous materials which, in finely divided form and in the presence of water, chemically react with calcium hydroxide at ordinary temperature to form compounds possessing cementitious properties. Pozzolans may also be referred to as latent hydraulic material. However, depending on the definition of pozzolanic material, some latent hydraulic material may not fall under the definition of a pozzolanic material. Examples of pozzolanic and/or latent hydraulic materials include granulated blast-furnace slag (gbfs), fly ash, natural pozzolans, burnt oil shale, or calcined clay.

Cement is a product that in most cases is used in locations relatively close to where it is manufactured. Therefore, in case of composite cements, its production requires the availability of a source of a pozzolanic and/or latent hydraulic material, this source being either natural or synthetic. However, the local availability of such source is not guaranteed in all regions where cement is produced, mainly because of the decreasing availability of some synthetic sources of pozzolanic and/or latent hydraulic material. Synthetic pozzolanic and/or latent hydraulic materials are in most cases a by-product of various industrial processes, such as fly ash from coal-fired power plants or blast-furnace slag from steel mills.

Another source of supplementary cementitious material is burnt (oil) shale, as defined in the cement standard EN197-1 section 5.2.5: Burnt shale, specifically burnt oil shale, is produced in a special kiln at elevated temperatures. Owing to the composition of the natural material and the production process, burnt shale contains clinker phases, mainly dicalcium silicate and monocalcium aluminate. It also contains, besides small amounts of free calcium oxide and calcium sulphate, larger proportions of pozzolanically reacting oxides, especially silicon dioxide. Consequently, in a finely ground state burnt shale shows pronounced hydraulic properties like Portland cement and in addition pozzolanic properties. Adequately ground burnt shale shall have a compressive strength of at least 25.0 MPa at 28 days when tested in accordance with EN 196-1.

Another source of supplementary cementitious material is waste material, such as quarry sludges and aggregate washing sludges. For example, EP 2192095 A1 describes a process for producing a hydraulic binder comprising calcined aggregate washing sludges.

It would be desirable to produce a synthetic supplementary cementitious material predominantly produced on basis of waste products. However, a supplementary cementitious material produced from waste materials, such as aggregate washing sludges, does not have a sufficient reactivity to be used as a replacement for natural supplementary cementitious materials, such as burnt (oil) shale.

Therefore, it is an object of the invention to provide supplementary cementitious material being produced from various waste products that is similar in chemistry and in performance to burnt shale. Further, it is an object of the invention to recycle waste products in an ecologically friendly way and to reduce the CO₂ footprint of composite cements.

In order to solve these objectives, the invention provides a method of producing a supplementary cementitious material, comprising the steps of:
- providing at least one waste material selected from quarry sludge, aggregate washing sludge and road cleaning sludge,
- removing excess water from said waste material so as to provide a dry waste material, and either:
- mixing the dry waste material with a source of calcium sulphate to obtain a raw material mixture,
- calcining the raw material mixture at a temperature of 700-900°C to obtain the supplementary cementitious material,
or:
- calcining the dry waste material at a temperature of 700-900°C to obtain a calcined waste material,
- mixing the calcined waste material with a calcined source of calcium sulphate to obtain the supplementary cementitious material.

The invention is based on the idea to transform waste material into cementitious material by calcining dry quarry sludge, aggregate washing sludge and/or road cleaning sludge and to increase the reactivity of the cementitious material by adding a source of calcium sulphate. The source of calcium sulphate can either be calcined together with the waste materials or be obtained in calcined form and added to the waste material that has been calcined separately. The calcined source of calcium sulphate accounts for an increased reactivity of the final product in hydrating systems. In particular, the supplementary cementitious material obtained by the inventive method has proven to have a similar chemistry and a similar performance than burnt shale.

Since quarry sludge, aggregate washing sludge and road cleaning sludge cannot be used as such due to their high water content, the method of the invention provides for a step of removing excess water from the waste material, such as drying or using a press, to provide a dry waste material. Preferably, the water removal step comprises the removal of excess water from the waste material by means of a filter chamber press, a heated screw or a rotary drum. In particular, the water removal step is performed to provide a dry waste material where the amount of free water is < 20 wt.-%, preferably < 5 wt.-%.

In a preferred embodiment, the water removal step comprises two steps. The first step consists in making use of a filter press to reduce the amount of free water to a value comprised between 15 and 25 wt.-% of the waste materials. In a second step, a heated screw is used to further reduce the amount of free water to < 10 wt.-%, preferably < 5 wt.-%.

As to the calcination step, experiments have revealed that a calcination temperature of 700-900° are generally useful in the method of the invention. As used herein, the calcination temperature refers to the maximum temperature that the raw material reaches during calcination. A preferred calcination temperature of the raw material mixture is between 700°C and 800°C. Another preferred calcination temperature is around 800°C, such as a temperature of 770-830°C. In some instances, calcining the raw material at 900°C did not lead to an improvement of the hydraulic reactivity when compared to a calcination temperature of around 800°C. It is believed that between 700°C and 800°C the amorphization of the clay mass is highest/greatest while at 900°C the clay mass is entirely transformed into gehlenite, i.e. is dead-burnt. On the other hand, a calcination at 800°C instead of 700°C leads to an increased reactivity/hydration at early age. The reason is believed to be the presence of more free lime/aluminate/C2F phases.

According to a preferred embodiment, calcining the raw material is carried out in such a way that full calcination of the raw material mixture is ensured. This can for example be achieved by calcination in a fluidized bed for a duration comprised between 5 and 25 minutes, preferentially 10 to 20 minutes, or in a rotary kiln for a duration of 20 to 80 minutes, preferentially 30 to 70 minutes.

Standard equipment may be used for the calcination process, such as a fluidized bed, a rotary calciner or a flash calciner.

In order to further increase the hydraulic reactivity of the supplementary cementitious material, a preferred embodiment provides that the dry waste material, after the water removal step, is crushed before being calcined, and the crushed waste material is sieved to obtain a fine fraction and a coarse fraction. Only the fine fraction is calcined.

Preferably, the fine fraction does not comprise particles having a particle size > 125µm.

In order to increase reactivity, a preferred embodiment provides that the supplementary cementitious material is ground after the calcination step.

The source of calcium sulphate added to the raw material mixture may be a natural or a synthetic source of calcium sulphate. The source of calcium sulphate may be natural or synthetic gypsum. The source of calcium sulphate may comprise the anhydrite form and/or the hemihydrate form of calcium sulphate. In any case, the source of calcium sulphate contains at least 60 wt.-% of gypsum, hemihydrate, anhydrite or mixtures thereof.

In order to produce a synthetic supplementary cementitious material that is entirely made from waste material, a preferred embodiment provides that the source of calcium sulphate is obtained from waste gypsum, such as plasterboards obtained from construction demolition waste. Various methods have been suggested for recovering calcium sulphate from plasterboards. Gypsum plasterboards are manufactured by mixing dehydrated gypsum with water and additives, which can be organic and/or inorganic. The resulting slurry is continuously poured between layers of paper or cardboard. The dehydrated gypsum reacts with water and recrystallizes in the form of gypsum, and the hardening is achieved by conveying the plasterboards through a drying oven.

According to a preferred embodiment of the inventive method, the source of calcium sulfate used in the supplementary cementitious material has been recovered from plasterboards by
a) comminuting plasterboards or a gypsum fraction thereof so as to obtain plasterboard particles,
b) subjecting the plasterboard particles to a heat treatment at an elevated temperature so as to volatilize and/or decompose organic components present in the plasterboard particles.

By conducting a heat treatment at an elevated temperature, the organic components contained in the plasterboard material are volatilized and/or decomposed. Reducing the content of the organic components on the one hand results in that the negative effect of some organic components on the compressive strength is reduced and on the other hand results in that the content of the organic components that would otherwise vary from one delivery to another can be standardized to a specific level so as to reduce the variability of the quality of the hydraulic binder. According to a preferred embodiment of the invention, the heat treatment comprises subjecting the plasterboard particles to a temperature in the range of 300°C - 550°C, preferably 350°C - 550°C, more preferably 400°C - 500°C. Tests have shown that the thermal degradation of the organic components starts at around 200°C, wherein a part of the volatile organic components are released from the plasterboard particles at a temperature of 300°C and the majority of the volatile organic components are released at a temperature of approximately 400°C.

Preferably, the heat treatment of the plasterboard particles is carried out for a time period of 2-20 min, preferably 2-10 min, more preferably 3-5 min.

The source of calcium sulphate that has been recovered from plasterboards by using a heat treatment may be used in the supplementary cementitious material without having being calcined together with the dry waste material. Being a calcined source of calcium sulphate, it can be mixed with the dry waste material that has been calcined separately.

Alternatively, waste gypsum without any prior thermal processing is used as the source of calcium sulphate in the inventive process. Since such gypsum is co-calcined together with the dry waster material, the calcination temperature and duration of the inventive process is indeed sufficient to calcine residues of paper and cardboard elements, as well as to calcine the admixtures and organic additives that may be contained in the waste gypsum. Optionally, waste gypsum is comminuted or crushed prior to its use as the source of calcium sulphate. Preferably, waste gypsum is plasterboards obtained from construction demolition waste.

The dry waste material used in the method of the invention may according to a preferred embodiment be characterized by the following composition:
- 25-55 wt.-%, preferably 30-40 wt.-%, carbonates,
- 10-30 wt.-%, preferably 22-28 wt.-%, sheet silicates, such as clay minerals,
- 15-35 wt.-%, preferably 25-30 wt.-%, silicates other than sheet silicates, such as feldspar and quartz.

The raw material mixture used in the method of the invention, comprising or consisting of the dry waste material and the source of calcium sulphate, may according to a preferred embodiment be characterized by the following composition:
- 25-55 wt.-%, preferably 30-40 wt.-%, carbonates,
- 10-30 wt.-%, preferably 22-28 wt.-%, sheet silicates, such as clay minerals,
- 15-35 wt.-%, preferably 25-30 wt.-%, silicates other than sheet silicates, such as feldspar and quartz,
- 10-15 wt.-%, preferably 10-12 wt.-%, calcium sulphates, expressed as weight percentage of CaSO₄.

Preferably, the raw material mixture consists of 80-95 wt.-% dry waste material selected from dried quarry sludge, aggregate washing sludge and road cleaning sludge, and mixtures thereof and 5-20 wt.-% waste gypsum, preferably 10-18 wt.-% waste gypsum.

According to another aspect of the invention, a supplementary cementitious material is provided, comprising calcined waste material selected from quarry sludge, aggregate washing sludge, road cleaning sludge, and mixtures thereof, and calcined source of calcium sulphate.

Preferably, at least 80 wt.-%, preferably at least 90 wt.-%, of the calcium sulphate contained in the calcined source of calcium sulphate is in the anhydrite form.

Preferably, the supplementary cementitious material may be characterized by the following composition:
- 30-60 wt.-% XRD-amorphous and/or poorly crystalline fraction,
- 5-35 wt.-% silicates other than sheet silicates, such as feldspars and quartz,
- 5-15 wt.-% calcium sulphate, expressed as weight percentage of CaSO₄,
- 5-10 wt.-% carbonates,
- 1-10 wt.-% calcium oxides (free lime) and portlandite,
- 1-10 wt.-% calcium silicates such as belite and larnite,
- 1-10 wt.-% a rest, such as iron oxides.

According to a further aspect of the invention, a hydraulic binder is provided, comprising Portland cement and a supplementary cementitious material obtained by the method of the invention.

Preferably, the hydraulic binder comprises 5-50 wt.-%, preferably 20-50 wt.-%, of the supplementary cementitious material.

Preferably, the hydraulic binder comprises 50-95 wt.-%, preferably 50-80 wt.-%, Portland cement. Any type of

Portland cement may be used. Suitable cements are the cements described in the European NF EN 197-1 Standard of April 2012 or mixtures thereof, preferably cement of the types CEM I, CEM II, CEM III, CEM IV or CEM V. More preferably, a Portland cement of the type CEM I 42.5 N is used.

The invention will now be described in more detail by reference to the following examples.

For the examples, the following raw materials were used:
- Aggregate Washing Sludge (From the Holcim Schweiz quarry in Kirchberg)
- Road cleaning sludge (from two different collection sites in Switzerland)
- Natural gypsum from a Swiss quarry, and
- Waste gypsum recovered from plasterboards, collected from a recycling platform in Switzerland

The aggregate washing sludge and the road cleaning sludge were subjected to a drying step, wherein these materials were dried at 105°C until their weight was stable, meaning that all free water was eliminated.

Thereafter, the dried material was subjected to a crushing step and the crushed material of dried samples were sieved at 125 µm, using only the finer 'passing' fraction for the subsequent tests.

Finally, a 5 kg powder mix was prepared in a medium-sized Turbula mixer (mixing time of 5 hours to ensure sufficient homogenization) from the fine fraction of the waste material (aggregate washing sludge and the road cleaning sludge, respectively) and the gypsum.

Four different raw material mixtures were prepared. The tables below show the composition of four raw material mixtures before calcination, and after calcination at 700°C, 800°C and 900°C, as determined by X-Ray diffraction, using the Rietveld method.

| | **MIC1** | **MIC2** | **MIC3** | **MIC4** |
|---|---|---|---|---|
| Aggregate Washing Sludge, Kirchberg quarry | 85 wt.-% | 70 wt.-% | 85 wt.-% | 70 wt.-% |
| Road Cleaning Sludge, collected in East Switzerland | 0 | 7.5 wt.-% | 0 | 7.5 wt.-% |
| Road Cleaning Sludge, collected in West Switzerland | 0 | 7.5 wt.-% | 0 | 7.5 wt.-% |
| Natural Gypsum | 15 wt.-% | 15 wt.-% | 0 | 0 |
| Waste Gypsum | 0 | 0 | 15 wt.-% | 15 wt.-% |

The four samples were then calcined in a laboratory furnace for a duration of 12 hours to ensure entire calcination.

Once calcined, these samples were ground in a disc beater mill to the same fineness of 8-10 µm d₅₀, as measured by Laser diffraction with wet dispersion in Isopropanol and by applying the Mie model.

The tables below show the mineralogical compositions of the different synthetic mineral components.

| **MIC 1** | | | | |
|---|---|---|---|---|
| | Raw material compositio n | Calcination 700°C | Calcination 800°C | Calcination 900°C |
| Albite | 0.0 | 0.0 | 0.0 | 0.0 |
| XRD-amorphous and poorly / microcrystalline | 18.5 | 34.6 | 32.7 | 24.0 |
| C2S_beta | 0.0 | 2.2 | 4.6 | 18.3 |
| Anhydrite | 2.1 | 10.9 | 10.9 | 12.5 |
| Bassanite | 9.8 | 0.0 | 0.0 | 0.0 |
| C12A7 Mayenite | 0.0 | 0.8 | 0.6 | 0.1 |
| C2F | 0.0 | 1.4 | 3.6 | 3.4 |
| Calcite | 23.7 | 11.0 | 0.0 | 0.1 |
| Clinochlore | 5.1 | 1.4 | 0.4 | 0.0 |
| Dolomite | 17.5 | 1.8 | 0.9 | 0.9 |
| Gypsum | 0 | 0.0 | 0.0 | 0.0 |
| Lime | 0.0 | 6.4 | 12.4 | 4.5 |
| Microcline intermediate 2 | 3.2 | 2.1 | 1.9 | 0.3 |
| Muscovite 2M1 | 0.1 | 0.1 | 0.0 | 0.0 |
| Periclase | 0.0 | 3.1 | 4.5 | 5.0 |
| Quartz | 19.9 | 22.0 | 22.4 | 16.3 |
| Wollastonite 2M | 0.0 | 1.7 | 3.8 | 3.2 |
| Akermanite | 0.0 | 0.6 | 1.2 | 11.2 |

| **MIC 2** | | | | |
|---|---|---|---|---|
| | Raw material composition | Calcination 700°C | Calcination 800°C | Calcination 900°C |
| Albite | 0.0 | 0.0 | 0.0 | 0.0 |
| XRD-amorphous and poorly / microcrystalline | 22.3 | 34.3 | 33.9 | 23.1 |
| C2S_beta | 0.0 | 2.5 | 5.6 | 16.6 |
| Anhydrite | 2.4 | 11.5 | 11.3 | 12.4 |
| Bassanite | 10.1 | 0.0 | 0.0 | 0.0 |
| C12A7 Mayenite | 0.0 | 0.6 | 0.8 | 0.5 |
| C2F | 0.0 | 1.1 | 3.8 | 3.4 |
| Calcite | 22.5 | 7.1 | 0.0 | 0.0 |
| Clinochlore | 4.5 | 2.5 | 0.7 | 0.7 |
| Dolomite | 15.1 | 1.2 | 0.8 | 1.2 |
| Gypsum | 0 | 0.0 | 0.0 | 0.0 |
| Lime | 0.0 | 8.3 | 9.8 | 3.1 |
| Microcline intermediate 2 | 3.2 | 2.4 | 2.1 | 1.2 |
| Muscovite 2M1 | 0.1 | 0.0 | 0.0 | 0.0 |
| Periclase | 0.0 | 2.6 | 3.9 | 4.4 |
| Quartz | 19.7 | 23.7 | 22.2 | 18.5 |
| Wollastonite 2M | 0.0 | 1.5 | 3.8 | 3.7 |
| Akermanite | 0.0 | 0.8 | 1.3 | 11.2 |

| **MIC 3** | | | | |
|---|---|---|---|---|
| | Raw material composition | Calcination 700°C | Calcination 800°C | Calcination 900°C |
| Albite | 0.0 | 0.0 | 0.0 | 0.0 |
| XRD-amorphous and poorly / microcrystalline | 19.1 | 38.2 | 33.3 | 22.7 |
| C2S_beta | 0.0 | 2.4 | 6.8 | 19.2 |
| Anhydrite | 0.1 | 7.7 | 8.6 | 7.8 |
| Bassanite | 0.5 | 0.0 | 0.0 | 0.0 |
| C12A7 Mayenite | 0.0 | 1.3 | 1.4 | 0.5 |
| C2F | 0.0 | 2.5 | 3.4 | 3.2 |
| Calcite | 24.3 | 4.8 | 0.1 | 0.0 |
| Clinochlore | 4.3 | 2.6 | 0.3 | 0.6 |
| Dolomite | 19.1 | 1.0 | 0.8 | 1.1 |
| Gypsum | 9.4 | 0.0 | 0.0 | 0.0 |
| Lime | 0.0 | 8.6 | 11.5 | 5.0 |
| Microcline intermediate 2 | 3.0 | 1.7 | 1.9 | 0.9 |
| Muscovite 2M1 | 0.1 | 0.0 | 0.0 | 0.0 |
| Periclase | 0.0 | 3.3 | 5.0 | 5.7 |
| Quartz | 19.9 | 24.4 | 22.1 | 18.1 |
| Wollastonite 2M | 0.0 | 0.7 | 3.5 | 3.5 |
| Akermanite | 0.0 | 0.7 | 1.3 | 11.5 |

| **MIC 4** | | | | |
|---|---|---|---|---|
| | Raw material composition | Calcination 700°C | Calcination 800°C | Calcination 900°C |
| Albite | 0.0 | 0.0 | 0.0 | 0.0 |
| XRD-amorphous | 23.0 | 35.5 | 30.9 | 21.7 |
| and poorly / microcrystalline | | | | |
| C2S_beta | 0.0 | 3.2 | 7.4 | 17.9 |
| Anhydrite | 0.0 | 7.8 | 8.7 | 8.7 |
| Bassanite | 0.8 | 0.0 | 0.0 | 0.0 |
| C12A7 Mayenite | 0.0 | 1.4 | 1.1 | 0.4 |
| C2F | 0.0 | 2.7 | 3.5 | 3.6 |
| Calcite | 22.8 | 6.1 | 0.0 | 0.1 |
| Clinochlore | 4.1 | 3.8 | 1.1 | 0.8 |
| Dolomite | 17.2 | 1.1 | 0.9 | 0.7 |
| Gypsum | 9.3 | 0.0 | 0.0 | 0.0 |
| Lime | 0.0 | 7.4 | 10.4 | 3.9 |
| Microcline intermediate 2 | 2.7 | 1.5 | 2.0 | 2.0 |
| Muscovite 2M1 | 0.1 | 0.0 | 0.0 | 0.0 |
| Periclase | 0.0 | 3.1 | 4.5 | 4.9 |
| Quartz | 20.0 | 24.7 | 23.7 | 18.5 |
| Wollastonite 2M | 0.0 | 1.1 | 4.1 | 4.0 |
| Akermanite | 0.0 | 0.7 | 1.8 | 12.7 |

### Reactivity of a cement Portland cement containing the calcined supplementary cementitious material (MIC 1-4)

The reactivity of the different mineral components in cement compositions was tested using an isothermal calorimeter TAM Air, supplied by TA Instruments. The setting of cementitious binders upon addition of water is an exothermic reaction, and the total heat produced is directly proportional to the reactivity of the cementitious binder. The heat measured is expressed in Joules per gram of total cementitious binder, i.e. Portland cement and synthetic supplementary cementitious material.

The samples are prepared by mixing the cement and water, with no sand. The water to cementitious binder weight ratio content is 0.4 in all tests.

A composite cement was prepared by mixing the synthetic supplementary cementitious material with industrial Normo 4, a CEM I Portland cement produced at the Holcim plant in Siggenthal, Switzerland. Apart from a reference sample containing CEM I Normo 4, all other samples were composed of 70 wt.-% CEM I and 30 wt.-% synthetic supplementary cementitious material. The differences in total heat measured can thus directly be attributed to the reactivity of the synthetic supplementary cementitious material in a hydrating system.

The tests were carried out twice, the results showed in the table below are an average value.

The following observations can be made.

The optimum calcination temperature of the selected raw materials to produce a synthetic supplementary cementitious material is between 700°C and 800°C. Calcination at 900°C leads to the same reactivity/hydration as the non-calcined powder mix. It is believed that, between 700°C and 800°C, the amorphization of the clay mass is highest/greatest while at 900°C the clay mass is transformed into gehlenite, i.e. is dead-burnt.

There is no negative effect when using waste gypsum instead of natural gypsum and/or when adding road cleaning sludges at the expense of aggregate washing sludges before calcination.

Calcination at 700°C of a mix entirely consisting of materials coming from circular economy (i.e. aggregate washing sludge + road cleaning sludge + waste gypsum) leads to high levels of hydration energy (i.e. strengths), and provide the same heat at 7 days as a burnt oil shale (see test XX below).

A calcination at 800°C instead of 700°C leads to an increased reactivity/hydration at early age/up to 12-18 hours. The reason is believed to be the presence of more free lime/aluminate/C2F phases.

| **Test number** | **Cementitious binder** | **Cumulated heat at 12 hours (J/g)** | **Cumulated heat at 168 hours (J/g)** |
|---|---|---|---|
| I | 100 wt.-% CEM I Normo 4 | 49 | 302 |
| II | 70 wt.-% CEM I Normo 4 30 wt.-% Natural pozzolan from France (Massif Central) | 35 | 237 |
| III | 70 wt.-% CEM I Normo 4 | 48 | 266 |
| | 30 wt.-% Natural pozzolan from Greece (Milos) | | |
| IV | 70 wt.-% CEM I Normo 4 30 wt.-% MIC1 - Not calcined | 40 | 197 |
| V | 70 wt.-% CEM I Normo 4 30 wt.-% MIC1 - Calcined 12 hours at 700°C | 52 | 220 |
| VI | 70 wt.-% CEM I Normo 4 30 wt.-% MIC1 - Calcined 12 hours at 800°C | 55 | 201 |
| VII | 70 wt.-% CEM I Normo 4 30 wt.-% MIC1 - Calcined 12 hours at 900°C | 42 | 184 |
| VIII | 70 wt.-% CEM I Normo 4 30 wt.-% MIC2 - Not calcined | 39 | 207 |
| IX | 70 wt.-% CEM I Normo 4 30 wt.-% MIC2 - Calcined 12 hours at 700°C | 62 | 223 |
| X | 70 wt.-% CEM I Normo 4 30 wt.-% MIC2 - Calcined 12 hours at 800°C | 56 | 220 |
| XI | 70 wt.-% CEM I Normo 4 30 wt.-% MIC2 - Calcined 12 hours at 900°C | 46 | 210 |
| XII | 70 wt.-% CEM I Normo 4 30 wt.-% MIC3 - Not calcined | 39 | 218 |
| XIII | 70 wt.-% CEM I Normo 4 30 wt.-% MIC3 - Calcined 12 hours at 700°C | 60 | 229 |
| XIV | 70 wt.-% CEM I Normo 4 30 wt.-% MIC3 - Calcined 12 hours at 800°C | 61 | 230 |
| XV | 70 wt.-% CEM I Normo 4 30 wt.-% MIC3 - Calcined 12 hours at 900°C | 45 | 213 |
| XVI | 70 wt.-% CEM I Normo 4 30 wt.-% MIC4 - Not calcined | 44 | 241 |
| XVII | 70 wt.-% CEM I Normo 4 30 wt.-% MIC4 - Calcined 12 hours at 700°C | 55 | 251 |
| XVIII | 70 wt.-% CEM I Normo 4 30 wt.-% MIC4 - Calcined 12 hours at 800°C | 59 | 239 |
| XIX | 70 wt.-% CEM I Normo 4 30 wt.-% MIC4 - Calcined 12 hours at 900°C | 50 | 219 |
| XX | 70 wt.-% CEM I Normo 4 30 wt.-% Burnt Oil Shale - From the Dotternhausen cement plant | 54 | 262 |

## Claims

1. A method of producing a supplementary cementitious material, comprising the steps of:
- providing at least one waste material selected from quarry sludge, aggregate washing sludge and road cleaning sludge,
- removing excess water from said waste material so as to provide a dry waste material, and either:
- mixing the dry waste material with a source of calcium sulphate to obtain a raw material mixture,
- calcining the raw material mixture at a temperature of 700-900°C to obtain the supplementary cementitious material,
or:
- calcining the dry waste material at a temperature of 700-900°C to obtain a calcined waste material,
- mixing the calcined waste material with a calcined source of calcium sulphate to obtain the supplementary cementitious material.

2. Method according to claim 1, wherein the calcination is carried out at a temperature of 770-830°C of raw material mixture.

3. Method according to claim 1 or 2, wherein the calcination is carried out in a fluidized bed for a duration comprised between 5 and 25 minutes, preferentially 10 to 20 minutes, or in a rotary kiln for a duration of 20 to 80 minutes, preferentially 30 to 70 minutes.

4. Method according to claim 1, 2 or 3, wherein the dry waste material is crushed before being calcined.

5. Method according to claim 4, wherein the crushed waste material is sieved to obtain a fine fraction and a coarse fraction and wherein only the fine fraction is calcined.

6. Method according to claim 5, wherein the fine fraction does not comprise particles having a particle size > 125µm.

7. Method according to any one of claims 1 to 6, wherein the supplementary cementitious material is ground after the calcination step.

8. Method according to any one of claims 1 to 7, wherein the source of calcium sulphate is obtained from waste gypsum, and preferentially from plasterboards.

9. Method according to any one of claims 1 to 8, wherein the raw material mixture has the following composition:
- 25-55 wt.-%, preferably 30-40 wt.-%, carbonates,
- 10-30 wt.-%, preferably 22-28 wt.-%, sheet silicates, such as clay minerals,
- 15-35 wt.-%, preferably 25-30 wt.-%, silicates other than sheet silicates, such as feldspar and quartz,
- 10-15 wt.-%, preferably 10-12 wt.-%, calcium sulphate, expressed as weight percentage of CaSO₄.

10. Method according to any one of claims 1 to 9, wherein the raw material mixture consists of 80-95 wt.-% dry waste material selected from dried quarry sludge, aggregate washing sludge, road cleaning sludge, and mixtures thereof, and 5-20 wt.-% waste gypsum, preferably 10-18 wt.-% waste gypsum.

11. A supplementary cementitious material comprising calcined waste material selected from quarry sludge, aggregate washing sludge and road cleaning sludge, and a calcined source of calcium sulphate.

12. Supplementary cementitious material according to claim 11, which has the following composition:
- 30-60 wt.-% XRD-amorphous and/or poorly crystalline fraction,
- 5-35 wt.-% silicates other than sheet silicates, such as feldspars and quartz,
- 5-15 wt.-% calcium sulphate, expressed as weight percentage of CaSO₄,
- 5-10 wt.-% carbonates,
- 1-10 wt.-% calcium oxides (free lime) and portlandite,
- 1-10 wt.-% calcium silicates such as belite and larnite,
- 1-10 wt.-% a rest, such as iron oxides.

13. A hydraulic binder comprising Portland cement and a supplementary cementitious material obtained by a method according to any one of claims 1 to 10 or a supplementary cementitious material according to claim 11 or 12.

14. Hydraulic binder according to claim 13, wherein the hydraulic binder comprises 5-50 wt.-%, preferably 20-50 wt.-%, of the supplementary cementitious material.

15. Hydraulic binder according to claim 13 or 14, wherein the hydraulic binder comprises 50-95 wt.-%, preferably 50-80 wt.-%, Portland cement.
